# EUROPÄISCHE PATENTANMELDUNG

(11) **EP 4 446 205 A1**
(43) Veröffentlichungstag der Anmeldung: **16.10.2024**
(21) Anmeldenummer: 24157745.1
(22) Anmeldetag: 15.02.2024
(51) Int. Cl.: B62D 49/06, B62D 55/06

(54) **FAHRZEUG MIT SPURWEITENEINSTELLUNG**

(30) Priorität: 13.03.2023 DE 102023106771
(71) Anmelder: Pfanzelt Maschinenbau GmbH, 87675 Rettenbach a. A. (DE)
(72) Erfinder: PFANZELT, Paul, 87675 Rettenbach a. A. (DE)
(74) Vertreter: Tetzner, Michael

(57) **Zusammenfassung**

Das erfindungsgemäße Fahrzeug weist einen Rahmen, ein erstes Fahrwerk sowie ein zweites Fahrwerk auf, wobei die beiden Fahrwerke auf gegenüberliegenden Seiten des Rahmens angeordnet und zur Veränderung der Spurweite relativ zum Rahmen mittels Hydraulikzylindern verschiebbar gehaltert sind. Dabei umfasst jeder Hydraulikzylinder ein am Rahmen fixiertes Bauteil und ein relativ zum Rahmen verschiebbares Bauteil, wobei das erste und zweite Fahrwerk jeweils am verschiebbaren Bauteil der Hydraulikzylinder befestigt ist und das verschiebbare Bauteil der Hydraulikzylinder in einer Führung am Rahmen verschiebbar geführt ist, wobei die Führung zur Übertragung von Kräften zwischen dem verschiebbaren Bauteil und dem Rahmen quer zur Verschieberichtung des verschiebbaren Bauteils ausgelegt ist.

## Beschreibung

Spurweitenverstellbare Fahrzeuge kommen beispielsweise in der Forst- und Landwirtschaft zum Einsatz. Die Fahrzeuge können dabei meist mit unterschiedlichen Anbaugeräten gekoppelt werden, wobei es sich beispielsweise um eine Seilwinde zur Unterstützung bei Fällarbeiten oder zum Holzrücken, Geräte zur Vorbereitung und Pflege von Pflanzungen, wie Mulchen, Säen, Häckseln oder dgl., handeln kann. Die Möglichkeit zur Veränderung der Spurweite gewährleistet dem Fahrzeug dabei auch im schwierigen Gelände einen sicheren Stand.

Durch die EP 3 606 629 B1 ist ein funkgesteuertes Fahrzeug bekannt, das ein erstes und ein zweites Fahrwerk aufweist, wobei die beiden Fahrwerke auf gegenüberliegenden Seiten eines Rahmens angeordnet sind. Jedes Fahrwerk weist zwei beabstandete Rechteckrohre auf, die in einem am Rahmen fest montierten Führungsrohr verschiebbar geführt sind. Die Einstellung der Spurweite erfolgt über Hydraulikzylinder, die eine Verschiebung der Fahrwerke relativ zum Rahmen bewirken.

Eine ähnliche Konstruktion offenbart die DE 10 2011 102 110 A1, wobei ein Unterwagen für einen Raupenkran ein Rahmenmittelteil und ein linkes und rechtes Raupenschiff aufweist, wobei jedes Raupenschiff zwei Träger aufweist, und die Träger verschiebbar am Rahmenmittelteil gelagert sind. Das Rahmenmittelteil weist dabei für jeden verschiebbar gelagerten Träger eine separate Ausnehmung zur verschiebbaren Aufnahme der Träger auf. Zur Verstellung der Spurbreite sind jedem Raupenschiff Hydraulikzylinder zugeordnet, die im Inneren des Rahmenmittelteils im Bereich des Drehkranzes angeordnet sind.

Aus der DE 42 10 532 A1 und der DE 20 47 480 A sind weitere Fahrwerke mit Spurweiteneinstellung bekannt.

Hiervon ausgehend lag der Erfindung die Aufgabe zugrunde, eine kostengünstigere Möglichkeit zur Spurweitenverstellung bereitzustellen.

Erfindungsgemäß wird diese Aufgabe durch die Merkmale des Anspruchs 1 gelöst.

Das erfindungsgemäße Fahrzeug weist einen Rahmen, ein erstes Fahrwerk sowie ein zweites Fahrwerk auf, wobei die beiden Fahrwerke auf gegenüberliegenden Seiten des Rahmens angeordnet und zur Veränderung der Spurweite relativ zum Rahmen mittels Hydraulikzylindern verschiebbar gehaltert sind. Dabei umfasst jeder Hydraulikzylinder ein am Rahmen fixiertes Bauteil und ein relativ zum Rahmen verschiebbares Bauteil, wobei das erste und zweite Fahrwerk jeweils am verschiebbaren Bauteil der Hydraulikzylinder befestigt ist und das verschiebbare Bauteil der Hydraulikzylinder in einer Führung am Rahmen verschiebbar geführt ist, wobei die Führung zur Übertragung von Kräften zwischen dem verschiebbaren Bauteil und dem Rahmen quer zur Verschieberichtung des verschiebbaren Bauteils ausgelegt ist.

Erfindungsgemäß haben die verschiebbaren Bauteile der Hydraulikzylinder somit nicht nur die Aufgabe Kräfte in Richtung der Zylinderachse zu erzeugen bzw. aufzunehmen, sondern habe auch die Funktion, Kräfte quer zur Verschieberichtung des verschiebbaren Bauteils zu übertragen und dienen somit auch zur Übertragung der Kräfte zwischen dem Rahmen und den Laufwerken.

Gemäß einem weiteren Aspekt der Erfindung ist jedes der beiden Fahrwerke über jeweils ein vorderes und ein hinteres Tragelement mit dem Rahmen verbunden, wobei die vorderen und hinteren Tragelemente in einer Führung am Rahmen verschiebbar geführt sind, um unterschiedliche Spurweiten einstellen zu können. Zur Veränderung der Spurweite kommen Hydraulikzylinder zur Anwendung, die ein am Rahmen fixiertes Bauteil und ein relativ zum Rahmen verschiebbares Bauteil aufweisen. Die Tragelemente haben primär die Aufgabe, die Kräfte zwischen dem Rahmen und den Laufwerken und umgekehrt zu übertragen, während die Hydraulikzylinder üblicherweise nur zur Einstellung der Spurweite vorgesehen sind. Erfindungsgemäß sind die Hydraulikzylinder aber so ausgestaltet und angeordnet, dass sie zumindest einzelne Tragelemente körperlich und funktionell ersetzen, indem jeder Hydraulikzylinder ein am Rahmen fixiertes Bauteil und ein relativ zum Rahmen verschiebbares Bauteil aufweist, wobei das erste und zweite Fahrwerk jeweils am verschiebbaren Bauteil der Hydraulikzylinder befestigt ist und das verschiebbare Bauteil der Hydraulikzylinder in einer Führung am Rahmen verschiebbar geführt ist und die Führung zur Übertragung von Kräften zwischen dem verschiebbaren Bauteil und dem Rahmen quer zur Verschieberichtung des verschiebbaren Bauteils ausgelegt ist.

Bei einem ersten erfindungsgemäßen Ausführungsbeispiel werden alle Tragelemente durch entsprechende Hydraulikzylinder ersetzt, während bei einem zweiten Ausführungsbeispiel entweder nur die vorderen oder nur die hinteren Tragelemente durch entsprechende Hydraulikzylinder gebildet werden.

Weitere Ausgestaltungen der Erfindung sind Gegenstand der Unteransprüche.

Gemäß einer bevorzugten Ausgestaltung der Erfindung handelt es sich bei der Führung im Rahmen um eine Führungsbohrung, die in direktem Führungskontakt mit einer äußeren Umfangsfläche des verschiebbaren Bauteils steht. Wird das am Rahmen fixierte Bauteil durch eine Kolbenstange und das verschiebbare Bauteil durch einen auf die Kolbenstange aufgeschobenen Zylinder gebildet wird, wird eine gute Stabilität der Anbindung der Fahrwerke an den Rahmen gewährleistet. Jedes Fahrwerk wird - in Fahrrichtung des Fahrzeugs gesehen - idealerweise durch wenigstens einen vorderen und/oder wenigstens einen hinteren Hydraulikzylinder an den Rahmen angebunden. So können beispielsweise zwei separate vordere Hydraulikzylinder vorgesehen sein, wobei der eine vordere Hydraulikzylinder mit dem ersten Fahrwerk und der zweite vordere Hydraulikzylinder mit dem zweiten Fahrwerk verbunden ist. In entsprechender Art und Weise können auch zwei separate hintere Hydraulikzylinder mit dem ersten bzw. zweiten Fahrwerk verbunden sein.

Im Rahmen der Erfindung ist es aber besonders vorteilhaft, wenn die beiden vorderen Hydraulikzylinder durch ein am Rahmen fixiertes Bauteil und zwei verschiebbare Bauteile gebildet werden, die an gegenüberliegenden Enden des fixierten Bauteils auf oder eingeschoben sind und das erste Fahrwerk am einen verschiebbaren Bauteil und das zweite Fahrwerk am anderen verschiebbaren Bauteil befestigt ist. Auch hier ergibt sich eine besonders gute Stabilität, wenn das am Rahmen fixierte Bauteil durch eine Koppelstange und die beiden verschiebbaren Bauteile durch aufgeschobene Zylinder ausgebildet werden. Auf diese Weise können auch die beiden hinteren Hydraulikzylinder durch ein am Rahmen fixiertes Bauteil und zwei verschiebbare Bauteile gebildet werden.

Die Begrenzung der Verschiebestrecke des verschiebbaren Bauteils kann durch ein Stoppelement erfolgen, um die maximale, einstellbare Spurweite zu begrenzen. Bevorzugt werden die Hydraulikzylinder als doppeltwirkende Hydraulikzylinder ausgebildet sind, um einerseits eine Verstellung im Sinne einer Vergrößerung der Spurweite und andererseits im Sinne einer Verkleinerung der Spurweite bewirken zu können. Um die Relativverschiebbarkeit und die Kraftübertragung zwischen Zylinder und Kolbenstange zu ermöglichen, sind (axial) beabstandete Führungselemente sowie (axial) beabstandete Dichtungen vorgesehen sind. Dabei kann zwischen einem stirnseitigen Ende der Kolbenstange und einem abgeschossenen Endbereich des Zylinders ein erster Druckraum ausbildet sein. Ein zweiter Druckraum wird durch die beabstandeten Dichtungen, eine Innenwandung des Zylinders und eine Umfangsfläche der Kolbenstange begrenzt. Weiterhin kann im Inneren der Kolbenstange ein mit dem ersten Druckraum in Fluidverbindung stehender erster Druckmittelkanal und ein mit dem zweiten Druckraum in Fluidverbindung stehender zweiter Druckmittelkanal vorgesehen werden, wobei der erste Druckmittelkanal und der zweite Druckmittelkanal am jeweils vom ersten bzw. zweiten Druckraum abgewandten Ende einen Druckmittelanschluss aufweisen. Auf diese Weise ergibt sich eine besonders kompakte Vorrichtung zur Einstellung der Spurweite.

Die Fahrwerke sind vorzugsweise als Raupenfahrwerk oder als Räderfahrwerk ausgebildet. Um einen vielfältigen Einsatz des Fahrzeugs zu ermöglichen, können, je nach Einsatzzweck, unterschiedliche Anbaugeräte angekoppelt werden. Hierbei kann es sich beispielsweise um eine Seilwinde zur Unterstützung bei Fällarbeiten oder zum Holzrücken, Geräte zur Vorbereitung und Pflege von Pflanzungen, wie Mulchen, Säen, Häckseln oder dgl., handeln. Ein besonders kompaktes Fahrzeug lässt sich dadurch erreichen, wenn das Fahrzeug fernsteuerbar ist und somit auf einen Führerstand oder eine Fahrzeugkabine verzichtet werden kann.

Jedes Fahrwerk kann zudem einen geeigneten Antriebsmotor, wie beispielsweise einen Ölmotor oder einen Elektromotor, aufweisen. Eine mit den Antriebsmotoren der Fahrwerke in Verbindung stehende Energiequelle (Batterie) oder aber auch der Motor selbst kann aber auch im Rahmen vorgesehen werden.

Anhand der nachfolgenden Beschreibung und Zeichnung wird ein Ausführungsbeispiel der Erfindung näher beschrieben.

In der Zeichnung zeigen
- Fig. 1: eine dreidimensionale Darstellung des erfindungsgemäßen Fahrzeugs gemäß einem ersten Ausführungsbeispiel,
- Fig. 2: eine Rückansicht des Fahrzeugs gemäß Fig. 1 mit schmaler Spurweiteneinstellung,
- Fig. 3: eine Rückansicht des Fahrzeugs gemäß Fig. 1 mit breiter Spurweiteneinstellung,
- Fig. 4: eine dreidimensionale Darstellung des Hydraulikzylinders,
- Fig. 5: eine Längsschnittdarstellung des Hydraulikzylinders in der schmalen Spurweiteneinstellung,
- Fig. 6: eine Längsschnittdarstellung des Hydraulikzylinders in der breiten Spurweiteneinstellung,
- Fig. 7: eine Detailschnittdarstellung im Bereich einer ersten Führungsbuchse,
- Fig. 8: eine Detailschnittdarstellung im Bereich einer zweiten Führungsbuchse,
- Fig. 9: eine Rückansicht des Fahrzeugs mit geschnittener Darstellung der Fahrwerke,
- Fig. 10: Detaildarstellung im Bereich der Fixierung des fixierten Bauteils am Rahmen,
- Fig. 11: teilweise geschnittene Draufsicht des Fahrzeugs,
- Fig. 12: Schnittdarstellung im Bereich der Führung des Hydraulikzylinders am Rahmen,
- Fig. 13: Schnittdarstellung im Bereich der Befestigung des Hydraulikzylinders am Fahrwerk,
- Fig. 14: eine dreidimensionale Darstellung des erfindungsgemäßen Fahrzeugs gemäß einem zweiten Ausführungsbeispiel,
- Fig. 15: eine Längsschnittdarstellung des Trägerelement in der schmalen Spurweiteneinstellung und
- Fig. 16: eine Längsschnittdarstellung des Trägerelements in der breiten Spurweiteneinstellung.

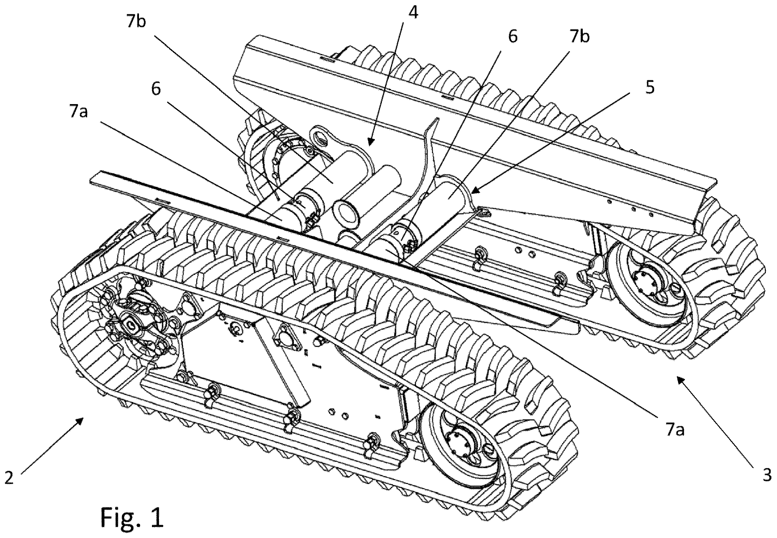

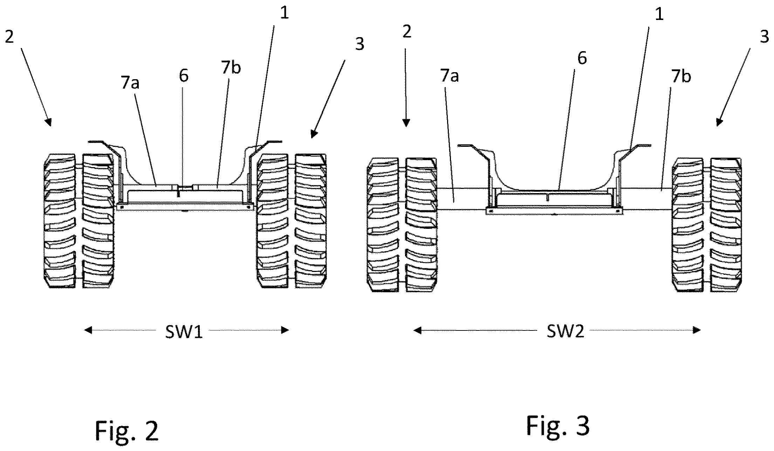

Das in Fig. 1 gezeigte erste Ausführungsbeispiel eines erfindungsgemäßen Fahrzeugs weist einen Rahmen 1, ein erstes Fahrwerk 2 und ein zweites Fahrwerk 3 auf, wobei die beiden Fahrwerke 2, 3 als Raupenfahrwerke ausgebildet und auf gegenüberliegenden Seiten des Rahmens 1 angeordnet sind. Anhand der Fig. 2 und 3 ist ersichtlich, dass die Fahrwerke 2 und 3 zur Veränderung der Spurweite SW1, SW2 relativ zum Rahmen 1 verschiebbar gehaltert sind. Als Spurweite wird hier der Abstand zwischen der Mitte der beiden Fahrwerke 1, 2 angesehen. Fig. 2 zeigt das Fahrzeug mit einer schmalen Spurweite SW1, während in Fig. 3 eine breite Spurweite SW2 eingestellt ist.

Die Spurweitenverstellung erfolgt über einen vorderen Hydraulikzylinder 4 und einen hinteren Hydraulikzylinder 5, wobei jeder der beiden Hydraulikzylinder 4, 5 ein am Rahmen 1 fixiertes Bauteil 6 und ein erstes relativ zum Rahmen 1 verschiebbares Bauteil 7a und ein zweites relativ zum Rahmen 1 verschiebbares Bauteil 7b umfasst.

Im dargestellten Ausführungsbeispiel wird das am Rahmen 1 fixierte Bauteil 6 durch eine Koppelstange gebildet, während die beiden verschiebbaren Bauteile 7a, 7b durch an gegenüberliegenden Enden der Koppelstange aufgeschobene Zylinder gebildet werden. Der vordere Hydraulikzylinder 4 als auch der hintere Hydraulikzylinder 5 nutzen somit jeweils eine gemeinsame Koppelstange als fixiertes Bauteil 6, auf die die beiden als Zylinder ausgebildeten verschiebbaren Bauteile 7a, 7b aufgeschoben sind.

Das erste Fahrwerk 2 ist dabei jeweils am ersten verschiebbaren Bauteil 7a des vorderen bzw. hinteren Hydraulikzylinders 4 bzw. 5 befestigt, während das zweite Fahrwerk 3 mit den zweiten verschiebbaren Bauteilen 7b des vorderen bzw. hinteren Hydraulikzylinders 4 bzw. 5 gekoppelt ist (Fig. 1 bis 3).

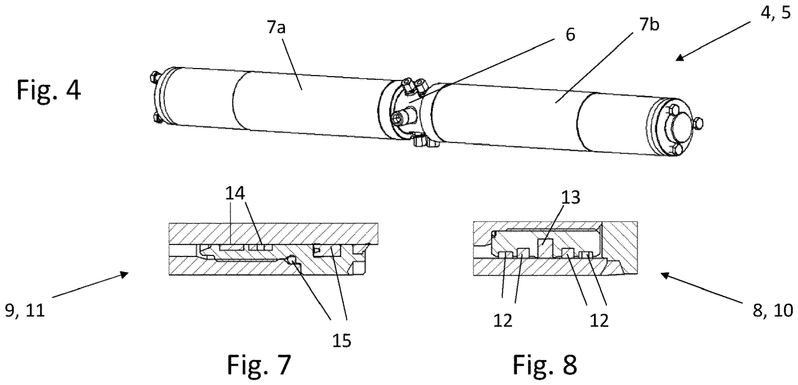

Der vordere und hintere Hydraulikzylinder 4, 5 sind im dargestellten Ausführungsbeispiel identisch ausgebildet und werden im Folgenden anhand der Fig. 4 bis 8 näher beschrieben.

Beide Hydraulikzylinder 4, 5 sind als doppeltwirkende Hydraulikzylinder ausgebildet, wobei zur Relativverschiebbarkeit und zur Kraftübertragung zwischen dem ersten bzw. zweiten verschiebbaren Bauteil 7a bzw. 7b (Zylinder) und dem fixierten Bauteil 6 (Koppelstange) jeweils zwei beabstandete Führungsbuchsen 8, 9 bzw. 10, 11 vorgesehen sind, wobei die Führungsbuchsen 8 und 10 (Fig. 8) jeweils auf die gegenüberliegenden Enden des fixierten Bauteils 6 aufgepresst sind, während die Führungsbuchsen 9 und 11 (Fig. 7) jeweils am aufgeschobenen Ende des ersten bzw. zweiten verschiebbaren Bauteils 7a, 7b fixiert sind.

Die Führungsbuchsen 8 und 10 sind jeweils mit Führungselementen 12 und Dichtungen 13 versehen. In entsprechender Weise sehen die Führungsbuchsen 9 und 11 Führungselemente 14 und Dichtungen 15 vor, um einerseits die Gleitverschiebbarkeit zwischen dem fixierten Bauteil 6 und den beiden verschiebbaren Bauteilen 7a, 7b zu gewährleisten und andererseits die Ausbildung der nachfolgend beschriebenen Druckräume zu ermöglichen.

Jede Seite der Hydraulikzylinder 4, 5 weist einen ersten Druckraum 16 bzw. 17 und einen zweiten Druckraum 18 bzw. 19 auf, die über im fixierten Bauteil 6 angeordnete erste Druckmittelkanäle 20, 22 bzw. zweite Druckmittelkanäle 21, 23 und zugehörige Druckmittelanschlüsse 24, 25, 26, 27 mit einem geeigneten Druckmittel, insbesondere Öl, zur Verschiebung der verschiebbaren Bauteile 7a, 7b beaufschlagt werden können. Der erste Druckraum 16 bzw. 17 wird durch das stirnseitige Ende 6a des fixierten Bauteils 6, die Innenwandung der verschiebbaren Bauteile 7a, 7b und ein die verschiebbaren Bauteile 7a, 7b abschließendes Abschlusselement 34 bzw. 37 und die Dichtungen 13 begrenzt. Der zweite Druckraum 18 bzw. 19 wird durch die äußere Umfangsfläche des fixierten Bauteil 6, die Innenwandung des ersten bzw. zweiten verschiebbaren Bauteils 7a, 7b sowie durch die beabstandeten Dichtungen 13, 15 gebildet.

Eine Druckmittelbeaufschlagung des ersten Druckraums 16 bzw. 17 führt zum Ausfahren der verschiebbaren Bauteile 7a, 7b und bewirkt somit eine Vergrößerung der Spurweite. Die Rückstellung bzw. Verringerung der Spurweite erfolgt durch Beaufschlagung der zweiten Druckräume 18 bzw. 19. Die zweiten Drückräume 18, 19 sind hierzu über kurze Querbohrungen 38, 39 mit den zweiten Druckkanälen 21 bzw. 23 verbunden. Im dargestellten Ausführungsbeispiel können die beiden Seiten separat voneinander angesteuert werden, sodass ggf. auch nur eines der beiden Fahrwerk 2, 3 relativ zum Rahmen verstellt werden könnte. Es wäre aber auch denkbar, dass die beiden Druckmittelkanäle 20 und 22 bzw. 21 und 23 gemeinsam über einen zugehörigen Anschluss beaufschlagbar wären, um so ausschließlich eine gemeinsame Verstellung zu bewirken.

Zur Begrenzung der maximal ausfahrbaren Strecke der verschiebbaren Bauteile 7a, 7b sind Stoppelemente 28 bzw. 29 vorgesehen ist, die in der Außenwandung des fixierten Bauteils 6 angeordnet sind und für das verschiebbare Bauteil 7a bzw. 7b im Bereich der Führungsbuchsen 9 bzw. 11 einen Anschlag bilden.

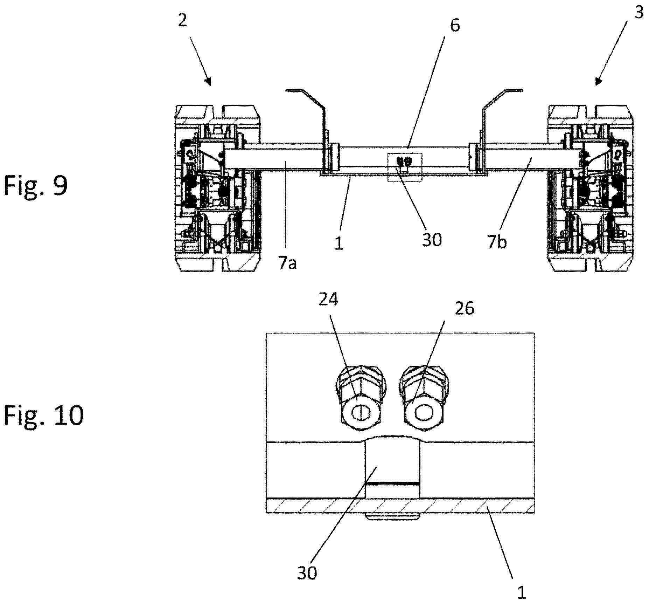

Das fixierte Bauteil 6 weist im dargestellten Ausführungsbeispiel einen mittig angeordneten Befestigungszapfen 30 auf, der zur Fixierung des Bauteils 6 am Rahmen 1 dient und dort insbesondere verschraubt ist (Fig. 9, 10).

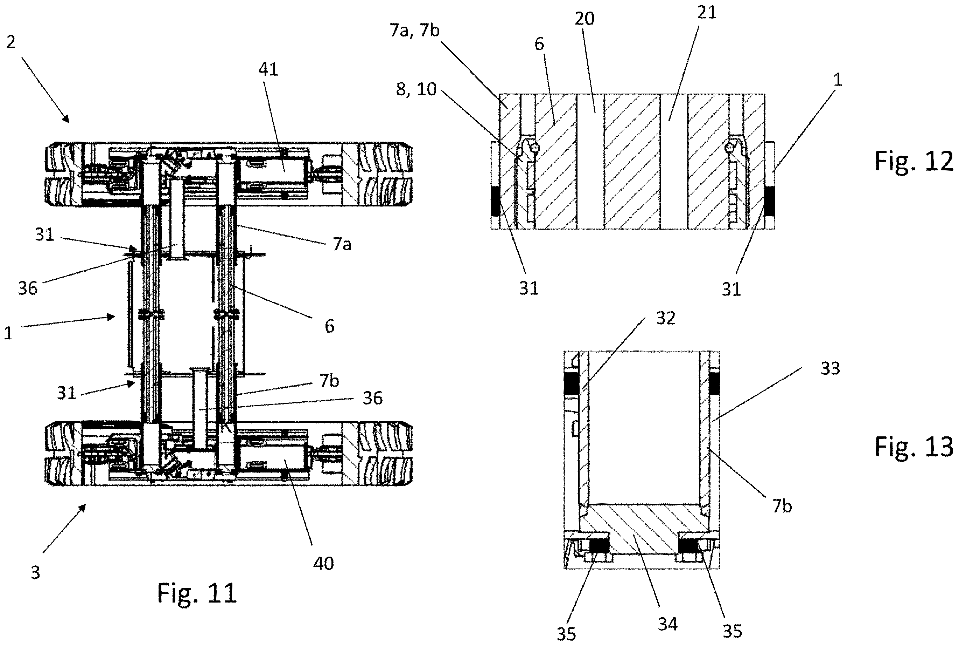

Im Folgenden wird anhand der Fig. 11 bis 13 die Führung der Hydraulikzylinder 4, 5 am Rahmen 1 und die Befestigung der Fahrwerke 2, 3 an die Hydraulikzylinder 4, 5 näher erläutert.

Die verschiebbaren Bauteile 7a, 7b der Hydraulikzylinder 4, 5 sind verschiebbar in einer Führung 31 am Rahmen 1 geführt, wobei die Führung zur Übertragung von Kräften zwischen dem verschiebbaren Bauteil 7a bzw. 7b und dem Rahmen 1 quer zur Verschieberichtung des verschiebbaren Bauteils 7a, 7b ausgelegt ist. Im dargestellten Ausführungsbeispiel gemäß Fig. 12 handelt es sich bei der Führung 31 um eine im Rahmen 1 ausgebildete Führungsbohrung, die in direktem Führungskontakt mit der äußeren Umfangsfläche des verschiebbaren Bauteils 7a bzw. 7b steht. Die beiden Hydraulikzylinder 4, 5 ragen somit auf beiden Seiten des Rahmens 1 durch die Führungsbohrungen 31 hindurch. Durch entsprechend ausgelegte Toleranzen wird auf diese Weise eine einfache, aber stabile Konstruktion zur Einstellung der Spurweite erreicht.

Die Fahrwerke 2, 3 sind an den aus dem Rahmen 1 herausragenden Enden der verschiebbaren Bauteile 7a, 7b gemäß Fig. 13 befestigt. Dazu sind die verschiebbaren Bauteile 7a, 7b an ihren aus dem Rahmen hinausragenden Enden mit Abschlusselementen 34 bzw. 37 versehen und werden mit diesen Enden durch passgenaue Öffnungen 32 in den Fahrwerkrahmen 33 des jeweiligen Fahrwerks 2, 3 eingesteckt, wo sie mittels Schrauben 35 im Bereich der Abschlusselemente 34 bzw. 37 am Fahrwerkrahmen 33 fixiert werden.

Vorzugsweise weist jedes Fahrwerk 2, 3 einen separaten Antriebsmotor 40, 41 auf, der beispielsweise durch einen Ölmotor oder einen Elektromotor gebildet wird. Die hierfür erforderliche Energiequelle (Hydraulikpumpe, Batterie) wird dann zweckmäßigerweise im Rahmen 1 angeordnet (nicht dargestellt) und steht in geeigneter Weise mit den Antriebsmotoren 40, 41 der Fahrwerke 2, 3 in Verbindung. Etwaige Verbindungsleitungen (Ölleitungen, Elektrokabel) zwischen dem Rahmen 1 und jeweiligen Fahrwerk 2, 3 werden beispielsweise durch Verbindungsrohre 36 (Fig. 11) geschützt zwischen der Energiequelle und den Antriebsmotoren 40, 41 geführt.

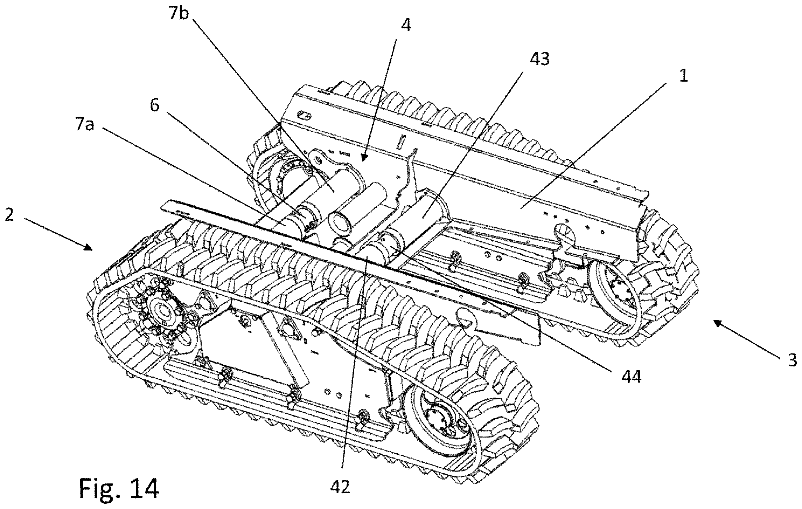

Während sich im bisher beschriebenen Ausführungsbeispiel der Rahmen 1 lediglich über die Hydraulikzylinder 4, 5 auf dem ersten Fahrwerk 2 und dem zweiten Fahrwerk 3 abstützt, zeigen die Fig. 14 bis 16 ein zweites Ausführungsbeispiel, bei dem anstelle der hinteren (alternativ der vorderen) Hydraulikzylinder verschiebbare Tragelemente 42, 43 vorgesehen sind.

Ansonsten weist das Fahrzeugs übereinstimmend einen Rahmen 1, ein erstes Fahrwerk 2 und ein zweites Fahrwerk 3 auf, wobei die beiden Fahrwerke 2, 3 als Raupenfahrwerke ausgebildet und auf gegenüberliegenden Seiten des Rahmens 1 angeordnet sind. Die Spurweitenverstellung erfolgt über die vorderen Hydraulikzylinder 4, die entsprechend dem ersten Ausführungsbeispiel ausgebildet sind und somit ein am Rahmen 1 fixiertes Bauteil 6 und ein erstes relativ zum Rahmen 1 verschiebbares Bauteil 7a und ein zweites relativ zum Rahmen 1 verschiebbares Bauteil 7b umfassen.

Übereinstimmend mit dem ersten Ausführungsbeispiel wird auch hier das am Rahmen 1 fixierte Bauteil 6 durch eine Koppelstange gebildet, während die beiden verschiebbaren Bauteile 7a, 7b durch an gegenüberliegenden Enden der Koppelstange aufgeschobene Zylinder gebildet werden. Die vorderen Hydraulikzylinder 4 nutzen somit jeweils eine gemeinsame Koppelstange als fixiertes Bauteil 6, auf die die beiden als Zylinder ausgebildeten verschiebbaren Bauteile 7a, 7b aufgeschoben sind. Außerdem ist das erste Fahrwerk 2 wiederum am ersten verschiebbaren Bauteil 7a befestigt, während das zweite Fahrwerk 3 mit dem zweiten verschiebbaren Bauteile 7b gekoppelt ist (Fig. 14). Die vorderen Hydraulikzylinder 4 entsprechen den in den Fig. 4 bis 8 des ersten Ausführungsbeispiels beschriebenen Hydraulikzylindern.

Die verschiebbaren Tragelemente 42, 43 sind zur Realisierung der Spurweiteneinstellung verschiebbar am Rahmen 1 gehaltert. Hierzu können im Rahmen 1 entsprechend ausgebildete Ausnehmungen vorgesehen sein, wobei geeignete Führungen ein Verkanten bzw. Verklemmen der Tragelemente vermeiden.

Die verschiebbaren Tragelemente 42, 43 können dabei jede geeignete Querschnittform, insbesondere rund oder viereckig, aufweisen. Im dargestellten Ausführungsbeispiel sind die verschiebbaren Tragelemente 42, 43 ähnlich wie die verschiebbaren Bauteile 7a, 7b ausgebildet. Außerdem ist ein am Rahmen 1 fixiertes Tragteil 44 vorgesehen, der ähnlich dem fixierten Bauteil 6 nach Art einer Koppelstange ausgebildet ist, während die beiden verschiebbaren Tragelemente 42, 43 durch an gegenüberliegenden Enden des fixiertes Tragteils 44 aufgeschobene Zylinder gebildet werden. Das erste Fahrwerk 2 ist dabei mit dem ersten verschiebbaren Tragelement 42 verbunden, während das zweite Fahrwerk 3 mit den zweiten verschiebbaren Tragelement 43 gekoppelt ist.

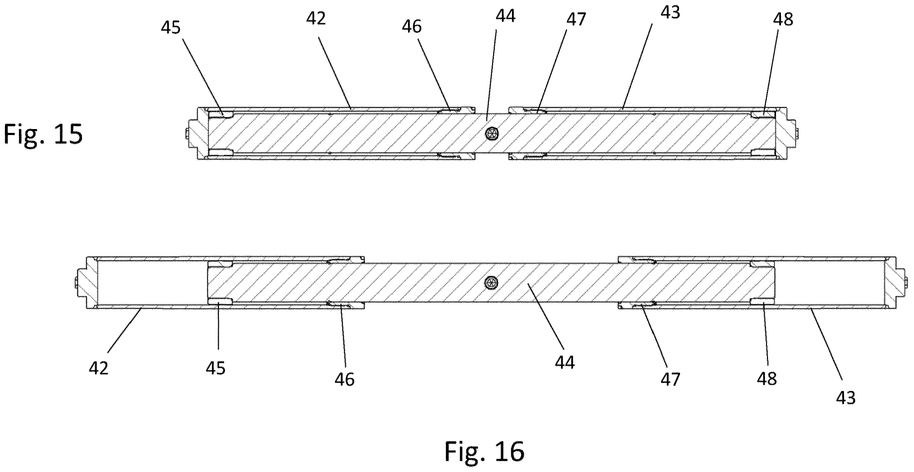

Zur Relativverschiebbarkeit und zur Kraftübertragung zwischen dem ersten bzw. zweiten verschiebbaren Tragelement 42, 43 und dem fixierten Tragteil 44 sind jeweils zwei beabstandete Führungsbuchsen 45, 46 bzw. 47, 48 vorgesehen, wobei die Führungsbuchsen 45 und 48 (Fig. 15, 16) jeweils auf die gegenüberliegenden Enden des fixierten Tragteils 44 aufgepresst sind, während die Führungsbuchsen 46 und 47 (Fig. 15, 16) jeweils am aufgeschobenen Ende des ersten bzw. zweiten verschiebbaren Tragteils 42, 43 fixiert sind.

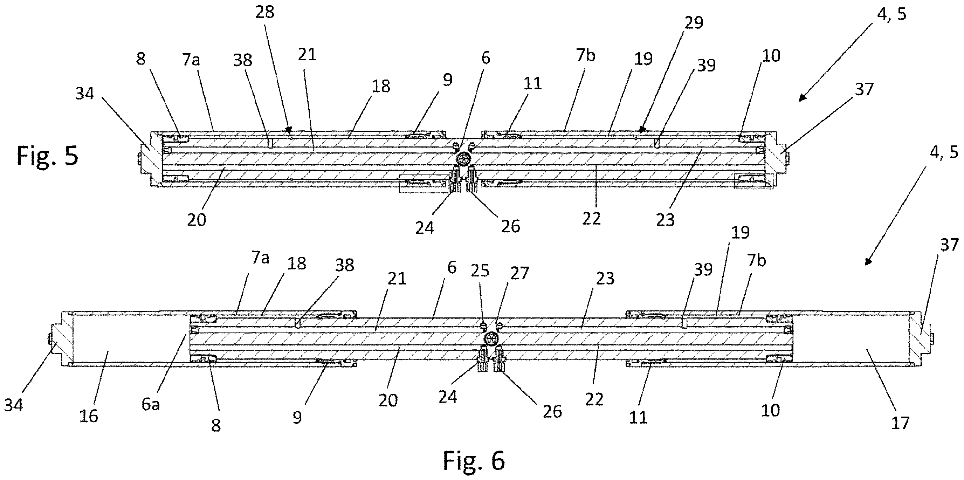

Der Unterschied zu den in den Fig. 5 und 6 dargestellten Hydraulikzylindern besteht lediglich darin, dass das fixierte Tragteil 44 keine Druckmittelkanäle und Druckmittelanschlüsse aufweist.Die Führung der verschiebbaren Tragelemente 42, 43 am Rahmen 1 und die Befestigung der Fahrwerke 2, 3 an den Tragelemente 42, 43 erfolgt anlog zu der in den Fig. 11 bis 13 gezeigten Führung der Hydraulikzylinder 4, 5 am Rahmen 1 und der Befestigung der Fahrwerke 2, 3 an den Hydraulikzylindern 4, 5.

## Patentansprüche

1. Fahrzeug mit einem Rahmen(1), einem ersten Fahrwerk (2) und einem zweiten Fahrwerk (3), wobei die beiden Fahrwerke (2, 3) auf gegenüberliegenden Seiten des Rahmens (1) angeordnet und zur Veränderung der Spurweite relativ zum Rahmen (1) mittels Hydraulikzylindern (4, 5) verschiebbar gehaltert sind, wobei jeder Hydraulikzylinder (4, 5) ein am Rahmen fixiertes Bauteil (6) und wenigstens ein relativ zum Rahmen (1) verschiebbares Bauteil (7a, 7b) umfasst und das erste und zweite Fahrwerk (2, 3) jeweils am verschiebbaren Bauteil (7a, 7b) der Hydraulikzylinder (4, 5) befestigt ist,
**dadurch gekennzeichnet, dass** das verschiebbare Bauteil (7a, 7b) der Hydraulikzylinder (4, 5) in einer Führung (31) am Rahmen (1) verschiebbar geführt ist, wobei die Führung zur Übertragung von Kräften zwischen dem verschiebbaren Bauteil (7a, 7b) und dem Rahmen (1) quer zur Verschieberichtung des verschiebbaren Bauteils (7a, 7b) ausgelegt ist.

2. Fahrzeug nach Anspruch 1, **dadurch gekennzeichnet, dass** es sich bei der Führung (31) im Rahmen (1) um eine Führungsbohrung handelt, die in direktem Führungskontakt mit einer äußeren Umfangsfläche des verschiebbaren Bauteils (7a, 7b) steht.

3. Fahrzeug nach Anspruch 1, **dadurch gekennzeichnet, dass** das am Rahmen (1) fixierte Bauteil (6) durch eine Kolbenstange und das verschiebbare Bauteil (7a, 7b) durch einen auf die Kolbenstange aufgeschobenen Zylinder gebildet wird.

4. Fahrzeug nach Anspruch 3, **dadurch gekennzeichnet, dass** zur Begrenzung der Verschiebestrecke des verschiebbaren Bauteils (7a, 7b) ein Stoppelement (28, 29) vorgesehen ist.

5. Fahrzeug nach Anspruch 1, **dadurch gekennzeichnet, dass** die Hydraulikzylinder - in Fahrrichtung des Fahrzeugs gesehen - durch wenigstens einen vorderen und wenigstens einen hinteren Hydraulikzylinder (4, 5) gebildet werden.

6. Fahrzeug nach Anspruch 5, **dadurch gekennzeichnet, dass** der vordere und der hintere Hydraulikzylinder (4, 5) jeweils durch ein am Rahmen (1) fixiertes Bauteil (6) und zwei verschiebbare Bauteile (7a, 7b) gebildet wird, die an gegenüberliegenden Enden des fixierten Bauteils (6) auf oder eingeschoben sind und das erste Fahrwerk (2) am einen verschiebbaren Bauteil (7a) und das zweite Fahrwerk (3) am anderen verschiebbaren Bauteil (7b) befestigt ist.

7. Fahrzeug nach Anspruch 6, **dadurch gekennzeichnet, dass** das am Rahmen (1) fixierte Bauteil (6) durch eine Koppelstange gebildet wird und die beiden verschiebbaren Bauteile (7a, 7b) durch aufgeschobene Zylinder gebildet werden.

8. Fahrzeug nach Anspruch 3, **dadurch gekennzeichnet, dass** die Hydraulikzylinder (4, 5) als doppeltwirkende Hydraulikzylinder ausgebildet sind, wobei zur Relativverschiebbarkeit und zur Kraftübertragung zwischen Zylinder und Kolbenstange beabstandete Führungselemente (12, 14) sowie beabstandete Dichtungen (13, 15) vorgesehen sind, wobei zwischen einem stirnseitigen Ende der Kolbenstange und einem abgeschossenen Endbereich des Zylinders ein erster Druckraum (16, 17) ausbildet ist und ein zweiter Druckraum (18, 19) durch die beiden beabstandeten Dichtungen (13, 15), eine Innenwandung des Zylinders und eine Umfangsfläche der Kolbenstange begrenzt wird.

9. Fahrzeug nach Anspruch 8, **dadurch gekennzeichnet, dass** im Inneren der Kolbenstange ein mit dem ersten Druckraum (16, 17) in Fluidverbindung stehender erster Druckmittelkanal (20, 22) und ein mit dem zweiten Druckraum (18, 19) in Fluidverbindung stehender zweiter Druckmittelkanal (21, 23) vorgesehen sind, wobei der erste Druckmittelkanal (20, 22) und der zweite Druckmittelkanal (21, 23) am jeweils vom ersten bzw. zweiten Druckraum (16, 17; 18, 19) abgewandten Ende einen Druckmittelanschluss (24 - 27) aufweisen.

10. Fahrzeug nach einem oder mehreren der vorhergehenden Ansprüche, **dadurch gekennzeichnet, dass** es sich hierbei um ein ferngesteuertes Fahrzeug zum Ankoppeln von wenigstens einem Anbaugerät handelt.

11. Fahrzeug nach einem oder mehreren der vorhergehenden Ansprüche, **dadurch gekennzeichnet, dass** es sich bei dem ersten und dem zweiten Fahrwerk (2, 3) um ein Raupenfahrwerk oder ein Räderfahrwerk handelt.

12. Fahrzeug nach einem oder mehreren der vorhergehenden Ansprüche, **dadurch gekennzeichnet, dass** jedes Fahrwerk (2, 3) einen Antriebsmotor (Ölmotor, Elektromotor, ...) aufweist.

13. Fahrzeug nach Anspruch 12, **dadurch gekennzeichnet, dass** im Rahmen (1) wenigstens eine mit den Antriebsmotoren der Fahrwerke (2, 3) in Verbindung stehende Energiequelle vorgesehen ist.

14. Fahrzeug nach Anspruch 1, **dadurch gekennzeichnet, dass** jedes der beiden Fahrwerke (2, 3) über jeweils ein vorderes und ein hinteres Tragelement mit dem Rahmen (1) verbunden, wobei die vorderen und hinteren Tragelemente in einer Führung am Rahmen verschiebbar geführt sind, um unterschiedliche Spurweiten einstellen zu können und wobei die Hydraulikzylinder so ausgestaltet und angeordnet sind, dass sie die vorderen und/oder hinteren Tragelemente körperlich und funktionell ersetzen.
